# EUROPÄISCHE PATENTSCHRIFT

(11) **EP 1 859 230 B1**
(45) Veröffentlichungstag und Bekanntmachung des Hinweises auf die Patenterteilung: **05.11.2008**
(21) Anmeldenummer: 06708044.0
(22) Anmeldetag: 06.02.2006
(51) Int. Cl.: G01D 5/16

(54) **VERFAHREN UND VORRICHTUNG ZUR BERÜHRUNGSLOSEN DREHWINKELERFASSUNG EINES DREHBAREN ELEMENTS**
METHOD AND DEVICE FOR DETERMINING THE ROTATIONAL ANGLE OF A ROTATABLE ELEMENT IN A NON-CONTACT MANNER
PROCEDE ET DISPOSITIF POUR DETERMINER SANS CONTACT DES ANGLES DE ROTATION D'UN ELEMENT ROTATIF

(30) Priorität: 10.03.2005 DE 102005011099
(43) Veröffentlichungstag der Anmeldung: 28.11.2007
(73) Patentinhaber: ROBERT BOSCH GMBH, 70442 Stuttgart (DE)
(72) Erfinder: KNECHT, Gerhard, 76473 Iffezheim (DE); FRICKER, David, F-67500 Hagenau (FR)
(86) Internationale Anmeldenummer: PCT/EP2006/050697
(87) Internationale Veröffentlichungsnummer: WO 2006/094866

(56) Entgegenhaltungen:
- DE-A1- 10 017 061
- US-A1- 2002 053 903
- PATENT ABSTRACTS OF JAPAN Bd. 2003, Nr. 12, 5. Dezember 2003 (2003-12-05) & JP 2004 085482 A (KOYO SEIKO CO LTD), 18. März 2004 (2004-03-18) in der Anmeldung erwähnt

## Beschreibung

Die Erfindung betrifft eine Vorrichtung sowie ein Verfahren zur berührungslosen Drehwinkelerfassung eines drehbaren Elements nach der Gattung der unabhängigen Ansprüche.

Aus der DE-A-100 17 061 ist eine Anordnung zur insbesondere berührungslosen Drehwinkelerfassung eines drehbaren Elements bekannt, bei der unter Auswertung von magnetisch beeinflussbaren Eigenschaften einer Sensoranordnung mit wenigstens zwei Sensorelementen eine von dem drehbaren Element erzeugte oder beeinflusste magnetische Feldstärke in einer Auswerteschaltung detektierbar ist und zur Ermittlung der Drehlage herangezogen wird, wobei ein Sensorelement unter Ausnutzung des magnetoresistiven Effekts arbeitet, und wenigstens zwei weitere Sensorelemente unter Ausnutzung des Halleffekts arbeiten, wobei die Auswerteschaltung zur logischen Verknüpfung der so erhaltenen drei Sensorsignale dient.

Aus der JP-A-2004085482 ist weiterhin eine Vorrichtung zur Erfassung von Drehwinkeln über mehr als eine Umdrehung eines rotierenden Schaftes bekannt, die ein erstes Mittel zur Winkelerfassung, ein Umsetzmittel zur Umwandlung einer rotierenden in eine longitudinale Bewegung sowie ein weiteres Mittel zur Erfassung einer linearen Position des rotierenden Schaftes mittels einer Abstandsmessung umfasst.

### Vorteile der Erfindung

Gegenüber dem Stand der Technik weisen die erfindungsgemäße Vorrichtung und das erfindungsgemäße Verfahren zur berührungslosen Drehwinkelerfassung eines drehbaren Elements den Vorteil auf, dass infolge einer erhöhten Auflösung eindeutige Drehwinkel über mehrere Umdrehungen des drehbaren Elements mit einer sehr hohen Genauigkeit sowie einer gesteigerten Störunanfälligkeit erfasst bzw. bestimmt werden können. Dazu umfasst die erfindungsgemäße Vorrichtung neben zumindest einem magnetoresistiven Sensorelement, das mindestens ein magnetoresistives Sensorsignal zur Erfassung eines Drehwinkels des drehbaren Elements in einem ersten Bereich abgibt, einen Tauchkern und eine Spule, die sich in Abhängigkeit von der Drehbewegung einer Welle in axialer Richtung der Welle relativ zueinander bewegen, wobei die Spule ein Spulensignal über die Veränderung der Spuleninduktivität abgibt, so dass in Kombination mit dem magnetoresistiven Sensorsignal Drehwinkel über den ersten Bereich hinaus eindeutig erfassbar sind. Durch die Ermittlung der Spuleninduktivität ergibt sich ferner der Vorteil, dass die eindeutigen Drehwinkel mechanisch gespeichert werden, und somit auch bei abgeklemmter Energieversorgung eine mechanische Verstellung des drehbaren Elements kein Problem darstellt, da die aktuelle Position des Tauchkerns innerhalb der Spule unmittelbar nach dem erneuten Anlegen der Energieversorgung wieder zur Verfügung steht.

In einer vorteilhaften Ausgestaltung ist vorgesehen, dass die Position des Tauchkerns innerhalb der Spule mittels eines Schwingkreises erfassbar ist, dessen Resonanzfrequenz von der Spuleninduktivität abhängt. Auf diese Weise ist eine sehr störsichere Drehwinkelerfassung gewährleistet, wobei die Positionsauflösung in Abhängigkeit von der Abtastrate während der Messung der der Resonanzfrequenz zugehörigen Periodendauer nahezu beliebig gesteigert werden kann.

In bevorzugter Weise befindet sich an der Welle und/oder dem Tauchkern ein Gewinde, wobei die Welle ein Bestandteil des drehbaren Elements ist. Somit kann sich der Tauchkern bei einer Drehbewegung der Welle in axialer Richtung relativ zu der Spule bewegen. In einer alternativen Ausgestaltung kann jedoch auch vorgesehen sein, dass die Welle über ein Getriebe mit dem drehbaren Element verbunden ist. Auf diese Weise ist es möglich, die Baulänge der Welle kompakt zu halten bzw. die Welle so anzuordnen, dass sich eine für den späteren Einbau günstige Bauform der gesamten Vorrichtung ergibt.

Weitere Vorteile der Erfindung ergeben sich durch die in den abhängigen Ansprüchen angegebenen Merkmale sowie aus der Zeichnung und der nachfolgenden Beschreibung.

### Zeichnung

Die Erfindung wird im Folgenden anhand der Figuren 1 bis 4 beispielhaft erläutert, wobei gleiche Bezugszeichen in den Figuren auf gleiche Bestandteile mit einer gleichen Funktionshinweise hindeuten. Es zeigen
Fig. 1: eine schematische Darstellung eines ersten Ausführungsbeispiels der erfindungsgemäßen Vorrichtung,
Fig. 2: Diagramme eines von einem magnetoresistiven Sensorelement abgegebenen, ersten Signals sowie einer von einem Schwingkreis erzeugten Resonanzfrequenz in Abhängigkeit von dem Drehwinkel bzw. der Anzahl der Umdrehungen einer einem drehbaren Element zugeordneten Welle,
Fig. 3: eine schematische Darstellung eines zweiten Ausführungsbeispiels der erfindungsgemäßen Vorrichtung und
Fig. 4: eine schematische Darstellung eines dritten Ausführungsbeispiels der erfindungsgemäßen Vorrichtung.

### Beschreibung

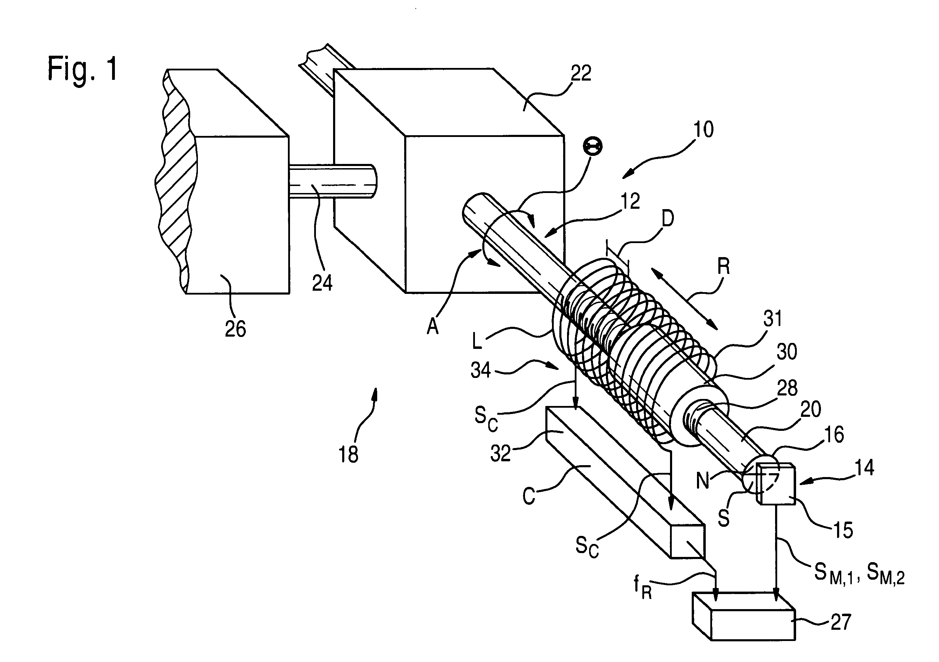

In Figur 1 ist eine schematische Darstellung eines ersten Ausführungsbeispiels der erfindungsgemäßen Vorrichtung 10 zur berührungslosen Drehwinkelerfassung eines drehbaren Elements 12 mit einem magnetoresistiven Sensorelement 14, das zwei Signale S_{M,1} und S_{M,2} zur Erfassung eines Drehwinkels Θ des drehbaren Elements 12 abgibt, gezeigt. Zur Ansteuerung des magnetoresistiven Sensorelements 14, das in diesem Fall als anisotroper, magnetoresistiver (AMR) Sensor 15 ausgeführt ist, dient ein Permanentmagnet 16 mit einem Nordpol N und einem Südpol S. Statt eines Permanentmagneten 16 mit nur zwei wechselnden Polen (Polpaar) ist es natürlich ebenso möglich, Permanentmagnete mit deutlich mehr Polpaaren einzusetzen. Ebenso können statt des AMR-Sensors 15 auch andere, magnetoresistive Sensorelemente zum Einsatz kommen. Im Folgenden soll jedoch der Einfachheit halber stets von einem AMR-Sensor 15 ausgegangen werden.

Das drehbare Element 12 ist in den hier gezeigten Ausführungsbeispielen gemäß der Figuren 1, 3 und 4 als ein elektrischer Lenkhilfeantrieb 18 ausgebildet, bei dem eine Welle 20, die über eine Antriebseinheit 22, beispielsweise ein hier nicht weiter beschriebenes Getriebe zur Untersetzung, und eine Antriebswelle 24 mit einem elektrischen Motor 26 verbunden ist.

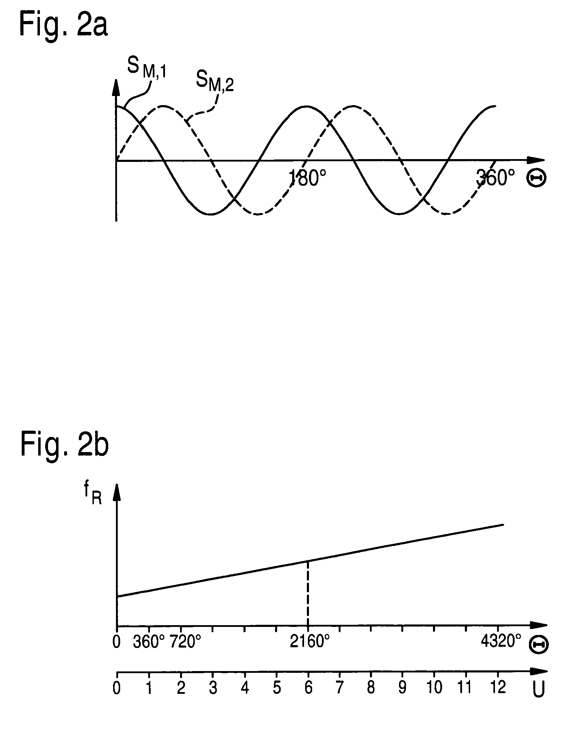

Im ersten Ausführungsbeispiel gemäß Figur 1 ist die Welle 20 ein Bestandteil des drehbaren Elements 12. Mittels des AMR-Sensors 15 und des ihm zugeordneten Permanentmagneten 16 können Drehwinkel 0 in einem ersten Bereich A von 0° bis 180° exakt und eindeutig erfasst werden. Dabei gibt der AMR-Sensor 15 die in Abhängigkeit von dem Drehwinkel Θ sinus- und kosinusförmig verlaufenden Signale S_{M,1} und S_{M,2} gemäß Figur 2a ab und leitet sie an eine Auswerteschaltung 27 weiter. Dem Verlauf der Signale S_{M,1} und S_{M,2} ist entnehmbar, dass eine Periodizität von 180° vorliegt und somit Drehwinkel Θ von mehr als 180° unter Verwendung eines einzigen AMR-Sensors nicht mehr eindeutig erfasst werden können. Zur eindeutigen Bestimmung von Drehwinkeln Θ außerhalb dieses ersten Bereichs A, also von mehr als 180°, ist demnach eine weitere Einrichtung erforderlich. Erfindungsgemäß ist dazu auf der Welle 20 ein Gewinde 28 vorgesehen, mit dem in Abhängigkeit von der Drehbewegung der Welle 20 ein Tauchkern 28, der ein entsprechendes, nicht gezeigtes Gewinde oder einen ebenfalls nicht gezeigten Dorn aufweisen kann, in axialer Richtung R der Welle 20 relativ zu einer Spule 31 bewegt wird. In vorteilhafter Weise besteht der Tauchkern 28 aus einem ferromagnetischen Material, wie Eisen, Neodym, AlNiCo (einer Aluminium-Nickel-Kobald-Legierung) oder dergleichen.

Dreht sich nun die Welle 20 um einen gewissen Betrag, so bewegt sich der Tauchkern 30 infolge des Gewindes 28 in axialer Richtung R innerhalb der Spule 31 und bewirkt eine Veränderung ihrer Spuleninduktivität L. Diese Veränderung wird mittels eines weiteren Signals S_{c} an einen Kondensator 32 mit der Kapazität C übergeben, der zusammen mit der Spuleninduktivität L einen Schwingkreis 34 mit der Resonanzfrequenz f_{R} bildet, wobei die sich ändernde Spuleninduktivität L auch eine Veränderung der Resonanzfrequenz f_{R} nach sich zieht. Statt eines einzigen Kondensators 32 mit der Kapazität C können natürlich auch einzelne oder mehrere, andere Bauelemente vorgesehen sein, die in Verbindung mit der Spuleninduktivität L eine charakteristische Resonanzfrequenz f_{R} des resultierenden Reihen- und/oder Parallel-Schwingkreises bewirken. Im Folgenden wird jedoch stets von einem LC-Schwingkreis 34 ausgegangen.

In Figur 2b ist zu erkennen, dass die Resonanzfrequenz f_{R} des Schwingkreises 34 linear von dem Drehwinkel Θ bzw. der Umdrehungsanzahl U und damit von der Eintauchtiefe des Tauchkerns 30 in die Spule 31 abhängt. Werden nun in der Auswerteschaltung 27 die AMR-Sensorsignale S_{M,1} und S_{M,2} mit der Information über die Resonanzfrequenz f_{R} des Schwingkreises kombiniert, so ist eine eindeutige Drehwinkelerfassung über den ersten Bereich A und des Weiteren über eine volle Umdrehung (Multiturn) der Welle 20 hinaus möglich. Durch diese Maßnahme ergibt sich insbesondere der Vorteil einer exakten, mechanischen Speicherung der Umdrehungsanzahl U der Welle 20 infolge der unmittelbar nach dem Einschalten der Zündung des Kraftfahrzeugs zur Verfügung stehenden Spuleninduktivität L. Eine mechanische Verstellung der Lenkung des Kraftfahrzeugs stellt demnach selbst bei abgeklemmter Fahrzeugbatterie kein Problem mehr für die anschließende Drehwinkelerfassung dar.

Bei jeder vollen Umdrehung der Welle 20 bewegt sich der Tauchkern 30 innerhalb der Spule 31 mindestens über eine axiale Strecke D. Um die Toleranzen im Zusammenhang mit einer geforderten Positions- bzw.

Drehwinkelauflösung so gering wie möglich zu halten, können entweder die Spulenwindungen entsprechend eng nebeneinander liegend angeordnet oder der axiale Verstellweg des Tauchkerns 30 über das Gewinde 28 relativ lang gewählt werden. Von diesen beiden Parametern hängt daher auch die axiale Strecke D ab. So kann die axiale Strecke D im Falle eng nebeneinander liegenden Spulenwindungen im Bereich winiger Millimeter liegen. Eine weitere Steigerung der Positionsauflösung ist darüber hinaus durch die Erhöhung der Abtastrate während der Messung der der Resonanzfrequenz f_{R} zugehörigen Periodendauer möglich.

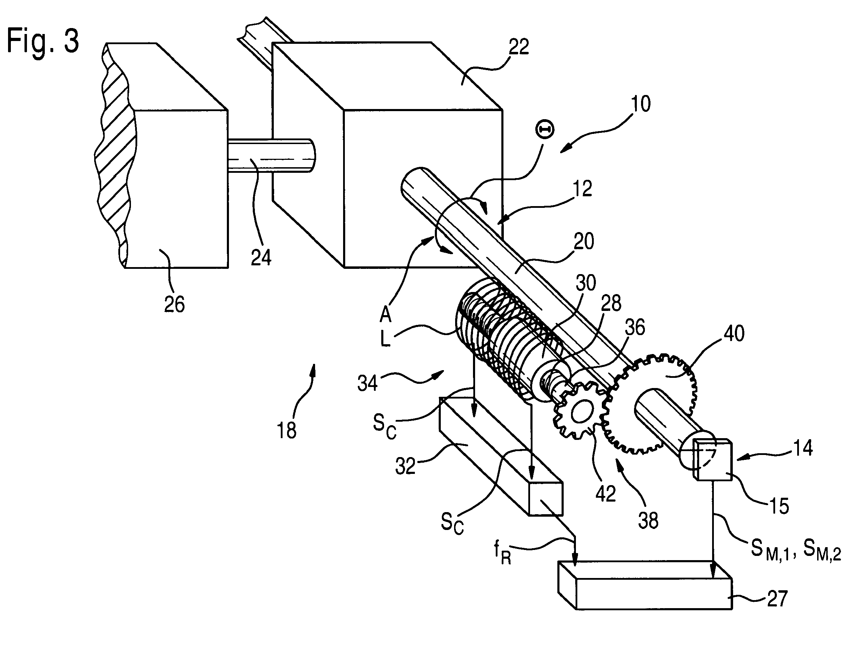

In Figur 3 ist ein zweites Ausführungsbeispiel der erfindungsgemäßen Vorrichtung 10 zur berührungslosen Drehwinkelerfassung des drehbaren Elements 12 gezeigt. Im Gegensatz zu Figur 1 sitzt der Tauchkern 30 nun nicht mehr direkt auf der Welle 20 des drehbaren Elements 12, sondern auf einer parallel zu der Welle 20 angeordneten Welle 36, die über ein Getriebe 38, das aus einem ersten, auf der Welle 20 und einem zweiten, auf der Welle 36 angebrachten Ritzel 40 bzw. 42 besteht, angetrieben wird. Da die Funktionsweise der erfindungsgemäßen Vorrichtung 10 mit der in Figur 1 übereinstimmt, soll hierauf im Folgenden nicht nochmals eingegangen werden. Wesentlich bei diesem Ausführungsbeispiel ist, dass sich der Bauraum infolge einer geringeren Länge der Welle 20 gegenüber dem ersten Ausführungsbeispiel reduzieren lässt. Das Übersetzungsverhältnis des Getriebes 38 kann an die Anforderungen hinsichtlich der Auflösung des Drehwinkels Θ angepasst werden.

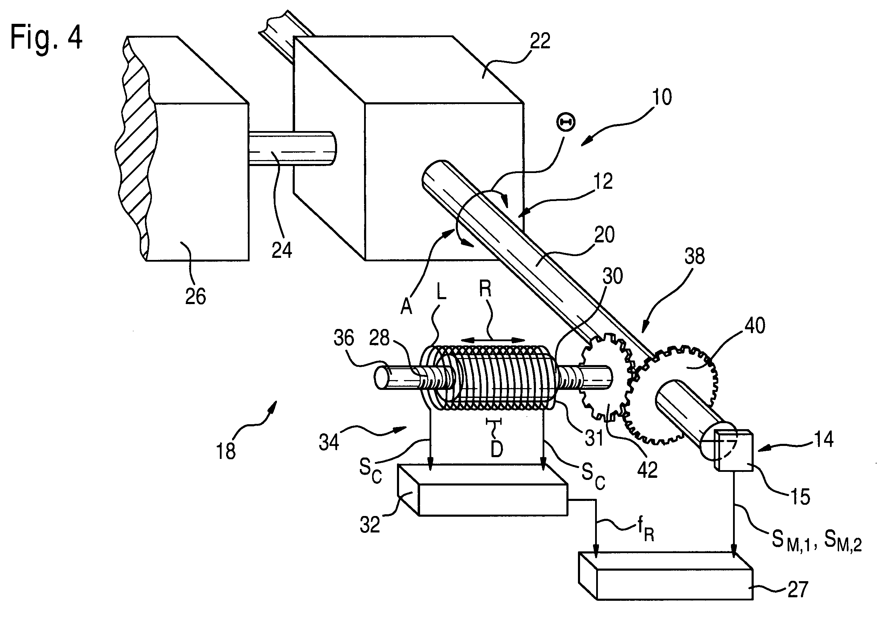

Ein drittes Ausführungsbeispiel der erfindungsgemäßen Vorrichtung 10 ist in Figur 4 dargestellt. Im Unterschied zu Figur 3 ist nun die Welle 36 über das Getriebe 38 und die darin entsprechend angeordneten Ritzel 40 und 42 in senkrechter Weise mit dem drehbaren Element 12 verbunden. Diese Anordnung gewährleistet eine noch kürzere Bauform der Welle 20 bzw. eine eventuelle Anpassung der Vorrichtung 10 an die gegebenen Platzverhältnisse. Auch hier entspricht die Funktionsweise der Vorrichtung 10 derjenigen gemäß Figur 1, so dass sich eine weitere Erläuterung erübrigt.

Es sei abschließend noch darauf hingewiesen, dass die gezeigten Ausführungsbeispiele weder auf die Figuren 1, 3 und 4 noch auf die Verläufe der Sensorsignale S_{M}, 1 und S_{M,2} sowie der aus dem Sensorsignal S_{c} resultierenden Resonanzfrequenz f_{R} gemäß der Figuren 2a und 2b beschränkt ist. So ist es insbesondere möglich, dass sich in Abhängigkeit vom eingesetzten Schwingkreis 34, vom Material des Tauchkerns 30, vom Gewinde 28 und/oder von der Bauform der Spule 31 auch ein nichtlineares Verhalten der Resonanzfrequenz f_{R} über dem Drehwinkel Θ bzw. der Umdrehungsanzahl U einstellt. Des weiteren sind auch andere Anordnungen zwischen den Wellen 20 und 36 sowie des sie verbindenden Getriebes 38 je nach Platzbedarf denkbar. In diesem Zusammenhang sei erwähnt, dass das Getriebe 38 selbstverständlich nicht nur die beiden Ritzel 40 und 42 umfassen muss, sondern auch aus einer größeren Anzahl von Ritzeln, Riemenscheiben, Reibrädern oder dergleichen bestehen kann. Überdies ist es ebenso möglich, dass sich nicht nur der Tauchkern 30 relativ zur Spule 31 sondern auch die Spule 31 relativ zum Tauchkern 30 bewegt, d.h. die Spule 31 wird entweder alleine oder in Kombination mit dem Tauchkern 30 über die Wellen 20 bzw. 36 mit geeigneten Mitteln, wie Ritzeln etc., in Bewegung versetzt. Die erfindungsgemäße Vorrichtung und das erfindungsgemäße Verfahren sind nicht auf eine Anwendung in Verbindung mit einem elektrischen Lenkhilfeantrieb beschränkt, sondern können auch zur Multiturn-Drehwinkelerfassung anderer, drehbarer Elemente herangezogen werden.

## Patentansprüche

1. Vorrichtung (10) zur berührungslosen Drehwinkelerfassung eines drehbaren Elements (12), mit zumindest einem magnetoresistiven Sensorelement (14), das mindestens ein erstes Signal (S_{M,1}, S_{M},₂) zur Erfassung eines Drehwinkels (Θ) des drehbaren Elements (12) in einem ersten Bereich (A) abgibt, **dadurch gekennzeichnet, dass** sich in Abhängigkeit von der Drehbewegung einer Welle (20, 36) ein Tauchkern (30) und eine Spule (31) in axialer Richtung (R) der Welle (20) relativ zueinander bewegen, wobei die Spule (31) ein weiteres Signal (S_{c}) über die Veränderung der Spuleninduktivität (L) abgibt, so dass in Kombination mit dem erstes Signal (S_{M,1}, S_{M,2}) Drehwinkel (Θ) über den ersten Bereich (A) hinaus eindeutig erfassbar sind.

2. Vorrichtung (10) nach Anspruch 1, **dadurch gekennzeichnet, dass** die Position des Tauchkerns (30) innerhalb der Spule (31) mittels eines Schwingkreises (34) erfassbar ist, dessen Resonanzfrequenz (f_{R}) von der Spuleninduktivität (L) abhängt.

3. Vorrichtung (10) nach Anspruch 1, **dadurch gekennzeichnet, dass** sich der Tauchkern (30) über ein sich an der Welle (20, 36) und/oder dem Tauchkern (30) befindendes Gewinde (28) relativ zur Spule (31) bewegt.

4. Vorrichtung (10) nach einem der vorhergehenden Ansprüche 1 oder 3, **dadurch gekennzeichnet, dass** die Welle (20) ein Bestandteil des drehbaren Elements (12) ist.

5. Vorrichtung (10) nach einem der vorhergehenden Ansprüche 1 oder 3, **dadurch gekennzeichnet, dass** die Welle (36) über ein Getriebe (38) mit dem drehbaren Element (12) verbunden ist.

6. Vorrichtung (10) nach Anspruch 1, **dadurch gekennzeichnet, dass** der erste Bereich (A) Drehwinkel (Θ) von 0° bis 180° umfasst.

7. Vorrichtung (10) nach einem der vorhergehenden Ansprüche, **dadurch gekennzeichnet, dass** das drehbare Element (12) ein elektronischer Lenkhilfeantrieb (18) ist.

8. Vorrichtung (10) nach Anspruch 1, **dadurch gekennzeichnet, dass** das magnetoresistive Sensorelement (14) ein anisotroper, magnetoresistiver Sensor (15) ist.

9. Verfahren zur berührungslosen Drehwinkelerfassung eines drehbaren Elements (12), wobei mindestens ein magnetoresistives Sensorsignal (S_{M,1}, S_{M,2}) von zumindest einem magnetoresistiven Sensorelement (14) zur Erfassung eines Drehwinkels (Θ) in einem ersten Bereich (A) abgegeben wird, **dadurch gekennzeichnet, dass** von einer Spule (31) ein Spulensignal (S_{c}) abgegeben wird, das die Veränderung der Spuleninduktivität (L) bei einer Drehbewegung einer Welle (20, 36) infolge der relativen Bewegung zwischen einem Tauchkern (30) und der Spule (31) in axialer Richtung (R) der Welle (20, 36) beschreibt, wobei zur eindeutigen Erfassung von Drehwinkeln (Θ) über den ersten Bereich (A) hinaus das Spulensignal (S_{c}) und das zumindest eine magnetoresistive Sensorsignal (S_{M,1}, S_{M,2}) kombiniert werden.

10. Verfahren nach Anspruch 9, **dadurch gekennzeichnet, dass** die Position des Tauchkerns (30) innerhalb der Spule (31) mittels eines Schwingkreises (34) erfasst wird, dessen Resonanzfrequenz (f_{R}) von der Spuleninduktivität (L) abhängt.

11. Verfahren nach Anspruch 9, **dadurch gekennzeichnet, dass** der Tauchkern (30) über ein sich an der Welle (20, 36) und/oder dem Tauchkern (30) befindendes Gewinde (28) relativ zur Spule (31) bewegt wird.

12. Verfahren nach Anspruch 9, **dadurch gekennzeichnet, dass** der erste Bereich (A) Drehwinkel (Θ) von 0° bis 180° umfasst.

## Claims

1. Device (10) for determining the rotational angle of a rotatable element (12) in a non-contact manner, having at least one magnetoresistive sensor element (14) which emits at least one first signal (S_{M,1}, S_{M,2}) for determining a rotational angle (Θ) of the rotatable element (12) in a first range (A), **characterized in that** a plunger core (30) and a coil (31) move relative to one another, on the basis of the rotational movement of a shaft (20, 36), in the axial direction (R) of the shaft (20), the coil (31) emitting a further signal (S_{c}) relating to the change in the coil inductance (L), with the result that rotational angles (Θ) beyond the first range (A) can be clearly determined in combination with the first signal (S_{M,1}, S_{M,2})

2. Device (10) according to Claim 1, **characterized in that** the position of the plunger core (30) inside the coil (31) can be determined using a resonant circuit (34) whose resonant frequency (f_{R}) depends on the coil inductance (L).

3. Device (10) according to Claim 1, **characterized in that** the plunger core (30) moves relative to the coil (31) by means of a thread (28) on the shaft (20, 36) and/or the plunger core (30).

4. Device (10) according to either of the preceding Claims 1 and 3, **characterized in that** the shaft (20) is part of the rotatable element (12).

5. Device (10) according to either of the preceding Claims 1 and 3, **characterized in that** the shaft (36) is connected to the rotatable element (12) by means of a gear mechanism (38).

6. Device (10) according to Claim 1, **characterized in that** the first range (A) comprises rotational angles (Θ) of 0° to 180°.

7. Device (10) according to one of the preceding claims, **characterized in that** the rotatable element (12) is an electronic steering aid drive (18).

8. Device (10) according to Claim 1, **characterized in that** the magnetoresistive sensor element (14) is an anisotropic magnetoresistive sensor (15).

9. Method for determining the rotational angle of a rotatable element (12) in a non-contact manner, at least one magnetoresistive sensor signal (S_{M,1}, S_{M,2}) being emitted by at least one magnetoresistive sensor element (14) in order to determine a rotational angle (Θ) in a first range (A), **characterized in that** a coil (31) emits a coil signal (S_{c}) which describes the change in the coil inductance (L) in the case of a rotational movement of a shaft (20, 36) on account of the relative movement between a plunger core (30) and the coil (31) in the axial direction (R) of the shaft (20, 36), the coil signal (S_{c}) and the at least one magnetoresistive sensor signal (S_{M,1}, S_{M,2}) being combined in order to clearly determine rotational angles (Θ) beyond the first range (A).

10. Method according to Claim 9, **characterized in that** the position of the plunger core (30) inside the coil (31) is determined using a resonant circuit (34) whose resonant frequency (f_{R}) depends on the coil inductance (L).

11. Method according to Claim 9, **characterized in that** the plunger core (30) is moved relative to the coil (31) by means of a thread (28) on the shaft (20, 36) and/or the plunger core (30).

12. Method according to Claim 9, **characterized in that** the first range (A) comprises rotational angles (Θ) of 0° to 180°.

## Revendications

1. Dispositif (10) pour la saisie sans contact d'un angle de rotation d'un élément rotatif (12) ayant au moins un élément de capteur (14) magnétorésistif fournissant au moins un premier signal (S_{M, 1}, S_{M, 2}) pour saisir l'angle de rotation (Θ) de l'élément rotatif (12) dans une première zone (A),
**caractérisé en ce qu'**
en fonction du mouvement de rotation d'un arbre (20, 36), un noyau plongeur (30) et une bobine (31) se déplacent de manière relative l'un par rapport à l'autre dans la direction axiale (R) de l'arbre (20),
la bobine (31) fournissant un autre signal (S_{c}) relatif à la variation de l'inductance (L) de la bobine de façon qu'en combinaison avec le premier signal (S_{M, 1}, S_{M, 2}), on puisse saisir de façon univoque des angles de rotation (Θ) au-delà de la première plage (A).

2. Dispositif (10) selon la revendication 1,
**caractérisé en ce qu'**
on saisit la position du noyau plongeur (30) dans la bobine (31) à l'aide d'un circuit oscillant (34) dont la fréquence de résonance (fᵣ) dépend de l'inductance (L) de la bobine.

3. Dispositif (10) selon la revendication 1,
**caractérisé en ce que**
le noyau plongeur (30) se déplace par rapport à la bobine (31) par l'intermédiaire d'un filetage (28) prévu sur l'arbre (20, 36) et/ou le noyau plongeur (30).

4. Dispositif (10) selon les revendications précédentes 1 ou 3,
**caractérisé en ce que**
l'arbre (20) fait partie de l'élément rotatif (12).

5. Dispositif (10) selon les revendications précédentes 1 ou 3,
**caractérisé en ce que**
l'arbre (36) est relié par une transmission (38) à l'élément rotatif (12).

6. Dispositif (10) selon la revendication 1,
**caractérisé en ce que**
la première plage (A) comprend des angles de rotation (Θ) compris entre 0° et 180°.

7. Dispositif (10) selon les revendications précédentes,
**caractérisé en ce que**
l'élément rotatif (12) est un entraînement électronique de direction assistée (18).

8. Dispositif (10) selon la revendication 1,
**caractérisé en ce que**
l'élément de capteur magnétorésistif (14) est un capteur magnétorésistif (15) anisotrope.

9. Procédé de saisie sans contact de l'angle de rotation d'un élément rotatif (12) selon lequel au moins un signal de capteur (S_{M, 1}, S_{M, 2}) magnétorésistif est fourni par au moins un élément de capteur magnétorésistif (14) pour saisir l'angle de rotation (Θ) dans une première plage (A),
**caractérisé en ce qu'**
une bobine (31) fournit un signal de bobine (S_{c}) décrivant la variation de l'inductance de bobine (L) pour un mouvement de rotation de l'arbre (20, 36) par suite du mouvement relatif entre un noyau plongeur (30) et la bobine (31) dans la direction axiale (R) de l'arbre (20, 36), et
pour saisir de manière univoque les angles de rotation (Θ) au-delà de la première zone (A), on combine le signal de bobine (S_{c}) et au moins un signal de capteur magnétorésistif (S_{M, 1}, S_{M, 2}).

10. Procédé selon la revendication 9,
**caractérisé en qu'**
on saisit la position du noyau plongeur (30) à l'intérieur de la bobine (31) à l'aide d'un circuit oscillant (34) dont la fréquence de résonance (fᵣ) dépend de l'inductance (L) de la bobine.

11. Procédé selon la revendication 9,
**caractérisé en qu'**
on déplace le noyau plongeur (30) par rapport à la bobine (31) par l'intermédiaire d'un filetage (28) prévu sur l'arbre (20, 36) et/ou le noyau plongeur (30).

12. Procédé selon la revendication 9,
**caractérisé en que**
la première plage (A) comprend des angle de rotation (Θ) compris entre 0° et 180°.
